# EUROPÄISCHE PATENTSCHRIFT

(11) **EP 2 050 325 B1**
(45) Veröffentlichungstag und Bekanntmachung des Hinweises auf die Patenterteilung: **23.11.2011**
(21) Anmeldenummer: 08017689.4
(22) Anmeldetag: 09.10.2008
(51) Int. Cl.: A01D 23/02, A01D 33/06

(54) **Rübenerntemaschine, insbesondere in Form einer selbstfahrenden Vollerntemaschine**
Turnip harvesting machine, especially in the form of a self-moving complete harvester
Récolteuse de betteraves, notamment sous la forme d'une récolteuse complète automobile

(30) Priorität: 15.10.2007 DE 102007049377
(43) Veröffentlichungstag der Anmeldung: 22.04.2009
(73) Patentinhaber: Grimme Landmaschinenfabrik GmbH & Co. KG, 49401 Damme (DE)
(72) Erfinder: Kalverkamp, Klemens, D-49401 Damme (DE)
(74) Vertreter: Pott, Ulrich

(56) Entgegenhaltungen:
- EP-A- 0 430 779
- DE-A1- 2 834 463
- FR-A- 2 450 042

## Beschreibung

Die Erfindung betrifft eine Rübenerntemaschine, insbesondere in Form einer selbstfahrenden Vollerntemaschine, gemäß dem Oberbegriff des Anspruchs 1.

Bekannte Rübenerntemaschinen dieser Art (DE 102 46 254 A1) sind mit einem Rodeaggregat versehen, an dem zur Beseitigung des Rübenkrautes, des Grünwuchses u. dgl. Pflanzenteile ein Blatthäcksler und weitere Werkzeuge vorgesehen sind. Mit der Hintereinanderanordnung der Blatthäcksler-Baugruppe und des im Abstand nachfolgenden Nachköpfers weist das Rodeaggregat eine nachteilig zu Schwingungen neigende Baulänge auf.

Auch bei einem Rodeaggregat gemäß EP 0 430 779 A1 werden von dem als Krautschläger ausgebildeten Blatthäcksler die erfaßten Pflanzenteile zerkleinert und diese als Häckselgut in unmittelbarer Nähe des Blatthäckslers zwischen den Reihen des Erntegutes abgelegt. Dabei gelangen auch gehäckselte Teile des Grünwuchses in den Nahbereich des Erntegutes, so dass für einen dem Blatthäcksler nachgeordneten Köpfroder o. dgl. Werkzeuge diese Pflanzenteile nach Art von Verschmutzungen wirken. Zur Durchführung eines Köpfschnittes vorgesehene Messerteile werden durch diese Verschmutzungen stärkeren Belastungen ausgesetzt, so dass damit ein nachteilig schneller Verschleiß der Messerteile auftreten kann. Das zwischen den Reihen befindliche Häckselgut kann durch Stützräder im Bereich des Blatthäckslers erfasst, in Fahrtrichtung aufgeschoben und damit zu einem Hindernis werden. Daraus resultieren Störungen durch Systemverstopfungen, die durch zeitaufwendige Reparaturen zu beseitigen sind (DE 26 47 264 A1; DE 31 51 484 A1).

Die Erfindung befasst sich mit dem Problem, eine Rübenerntemaschine zu schaffen, deren im Bereich des Rodeaggregates nacheinander wirksame Werkzeuge mit verbesserter Stabilität in das System integrierbar sind, dabei zumindest für den dem Blatthäcksler nachfolgenden Nachköpfer eine im wesentlichen saubere Bearbeitungszone vorgebbar ist und damit bei verlängerter Einsatzzeit des Aggregates ein Erntevorgang mit höherer Produktivität möglich ist.

Die Erfindung löst diese Aufgabe mit einer Erntemaschine mit den Merkmalen des Anspruchs 1. Weitere Ausgestaltungen der erfindungsgemäßen Rübenerntemaschine ergeben sich aus den Ansprüchen 2 bis 47.

Bei der erfindungsgemäßen Erntemaschine ist der Blatthäcksler als funktional verbesserte und in das Rodeaggregat integrierbare Baugruppe so ausgebildet, dass beim Häckselvorgang zerkleinerte und in einem weitgehend entgegen der Fahrtrichtung verlaufenden Förderstrom zusammengeführte Pflanzenteile gezielt beeinflusst und vollständig aus dem Wirkbereich zumindest des nachgeordneten Nachköpfers herausgehalten werden. Damit wird das Häckselgut so geleitet, dass eine verstopfungsfreie Wirkung des Blatthäckslers und des nachgeordneten Nachköpfers des Systems eine wesentliche Produktivitätssteigerung durch verringerte Ausfallzeiten gewährleistet.

Das auf der kompakten Anordnung einer Häcksel-Nachköpf-Einheit aufbauende Konzept der Maschine sieht vor, dass der aus den gehäckselten Pflanzenteilen erzeugte Förderstrom gezielt auf eine Förderstrecke gelenkt wird, entlang der das Häckselgut bis hinter den Nachköpfer verlagerbar ist. Damit wird das Häckselmaterial über den dem Blatthäcksler nachgeordneten Nachköpfer nach Art einer Überbrückung abgeleitet, so dass im Nahbereich des zweiten Werkzeuges eine zusätzliche Verschmutzung des zur Rodung anstehenden Erntegutes, insbesondere der zur Köpfphase erreichten Rübenköpfe, vermieden wird. Die eigentlichen Wirkbereiche jeweiliger Schnittmesser von Nachköpfern o. dgl. Werkzeugteilen werden durch den abgeleiteten Häckselstrom von störenden Faserbestandteilen, mitgerissenen Steinen, Kluten u. dgl. Beimengungen freigehalten, zusätzliche Reib- und Verschleißbelastungen der Schneidmesser werden vermieden und die Produktivität des Systems ist durch geringere Störanfälligkeit vorteilhaft erhöht.

Bei der konstruktiven Umsetzung dieses optimierten Fördersystems kann auch eine stabilisierende Anpassung einzelner Bauelemente zur Verbesserung des Aggregates insgesamt vorgenommen werden. Dazu werden der Blatthäcksler und der Nachköpfer in Längsrichtung der Maschine so weit zusammengeführt, dass diese beiden Teile eine kompakte Baueinheit bilden und ein vorteilhaft verringerte Längenabmessungen aufweisendes System bereitgestellt wird. Damit ist eine geringe Bauteillängen aufweisende Rahmenkonstruktion als einfacheres Stützsystem einsetzbar, zusätzliche Stützelemente im Bereich des Nachköpfers sind entbehrlich und für den Ernteprozess wird insgesamt ein kompakteres und schwingstabileres Aggregat erreicht, das insgesamt verstopfungsfrei arbeitet.

pakteres und schwingstabileres Aggregat erreicht, das insgesamt verstopfungsfrei arbeitet.

In einer weiteren Ausführung der kompakten Häckseleinheit ist denkbar, diese mit einer oder mehreren Putzvorrichtung(en) zu kombinieren, so dass das vorbeschriebene Rodeaggregat für eine Vollerntemaschine eine weiter verbesserte Schnittführung aufweist. Ebenso kann diese Häcksel-Putz-Einheit als eine selbständige, unabhängig von der Vollerntemaschine einsetzbare Baugruppe ausgelegt werden. Diese ist beispielsweise nach Montage an einem Zugfahrzeug zur Vorbereitung eines späteren zeitversetzten Rodevorgangs einsetzbar, wobei dessen spezielle Erntemaschine dann ohne Häcksler betreibbar ist.

Weitere Einzelheiten und vorteilhafte Ausgestaltungen der Erfindung ergeben sich aus der nachfolgenden Beschreibung und der Zeichnung, in der mehrere Ausführungsbeispiele der erfindungsgemäßen Rübenerntemaschine näher veranschaulicht sind. In der Zeichnung zeigen:
- Fig. 1: eine teilweise geschnittene Seitenansicht einer als selbstfahrende Vollerntemaschine ausgebildeten Rübenerntemaschine gemäß dem Stand der Technik,
- Fig. 2: eine vergrößerte Ausschnittsdarstellung eines Rodeaggregates im Bereich der einen Blatthäcksler und einen Nachköpfer als zweites Werkzeug aufweisenden Baugruppe,
- Fig. 3: eine teilweise geschnittene Unteransicht von mehreren in einer Reihenanordnung für ein 6-reihiges Rodeaggregat vorgesehenen Baugruppen,
- Fig. 4: eine Draufsicht der Baugruppe gemäß Fig. 3,
- Fig. 5: eine Draufsicht ähnlich Fig. 4 mit schwenkbaren Auslassteilen im Bereich des Blatthäckslers,
- Fig. 6: eine Draufsicht ähnlich Fig. 5 mit veränderter Auslassrichtung des Blatthäckslers,
- Fig. 7: eine Seitenansicht ähnlich Fig. 2 mit Detaildarstellungen im Bereich des Blatthäckslers und des Nachköpfers,
- Fig. 8: eine Seitenansicht ähnlich Fig. 7 mit veränderter Stützkonstruktion im Bereich des Nachköpfers,
- Fig. 9: eine Seitenansicht ähnlich Fig. 2 mit einer zweiten Ausführung einer Messereinheit am Nachköpfer,
- Fig. 10: eine Seitenansicht ähnlich Fig. 9 mit weiteren Details im Bereich des Nachköpfers,
- Fig. 11: eine Draufsicht ähnlich Fig. 4 mit dem Nachköpfer gemäß Fig. 10,
- Fig. 12: eine Seitenansicht ähnlich Fig. 2 mit einer dem Blatthäcksler nach- geordneten Putzvorrichtung als zweites Werkzeug,
- Fig. 13: eine Seitenansicht ähnlich Fig. 12 mit einer zweiten Ausführung der Putzvorrichtung, und
- Fig. 14: eine Unteransicht des Blatthäckslers mit der Putzvorrichtung gemäß Fig. 13.

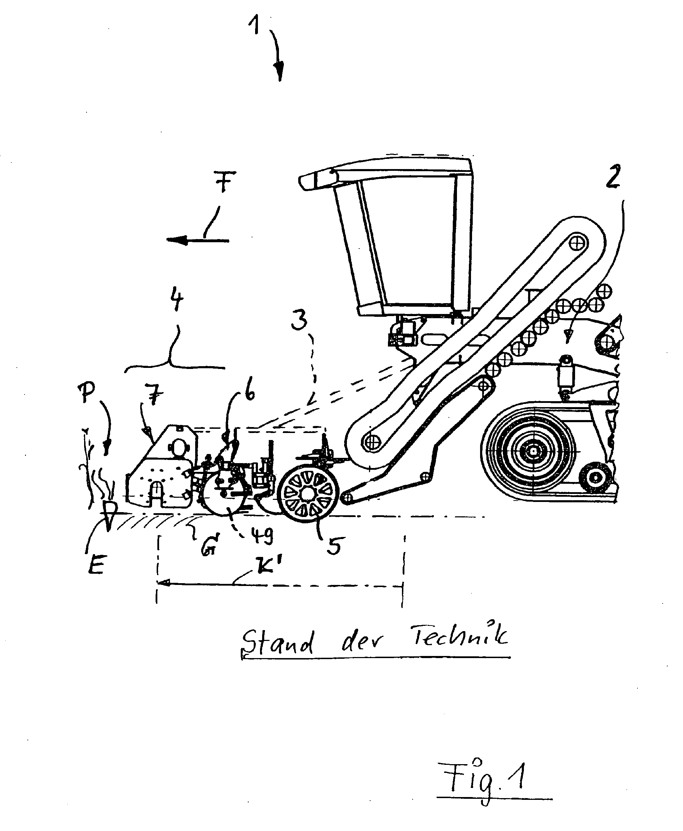

In Fig. 1 ist in teilweiser Schnittdarstellung eine insgesamt mit 1 bezeichnete, insbesondere in Form eines Vollernters ausgeführte Rübenerntemaschine dargestellt, an deren Fahrzeugrahmen 2 ein durch nicht näher dargestellte Tragelemente 3 gehaltenes Rodeaggregat 4 vorgesehen ist. Diese Rübenerntemaschine 1 wird von der Firma Grimme unter der Bezeichnung "Maxtron 620" (Grimme Landmaschinenfabrik GmbH & Co. KG, Damme, Prospekt-Nr. 09/04/1500) vertrieben, wobei diese Maschine 1 insbesondere auch in Form einer 6-reihigen Zuckerrüben-Vollerntemaschine ausgeführt ist. Bei derartigen Maschinen 1 sind in einer Fahrtrichtung F vorgeordnet jeweiligen Rodescharen 5 bei mehrreihiger Anordnung sowohl Schnittwerkzeuge in Form von Nachköpfern 6 als auch vor diesen gehaltene Blatthäcksler 7 vorgesehen. Mit dem Blatthäcksler 7 werden in bekannter Verfahrensführung Rübenblätter, Grünwuchs o. dgl. Pflanzenteile P im Abstand vor dem bei 5 erfolgenden Rodevorgang vom im Boden G eingewachsenen Erntegut E entfernt und abgelegt, wobei Stützelemente 49 im Bereich des Nachköpfers 6 zu Aufschiebungen des Häckselgutes führen und damit das System störanfällig ist.

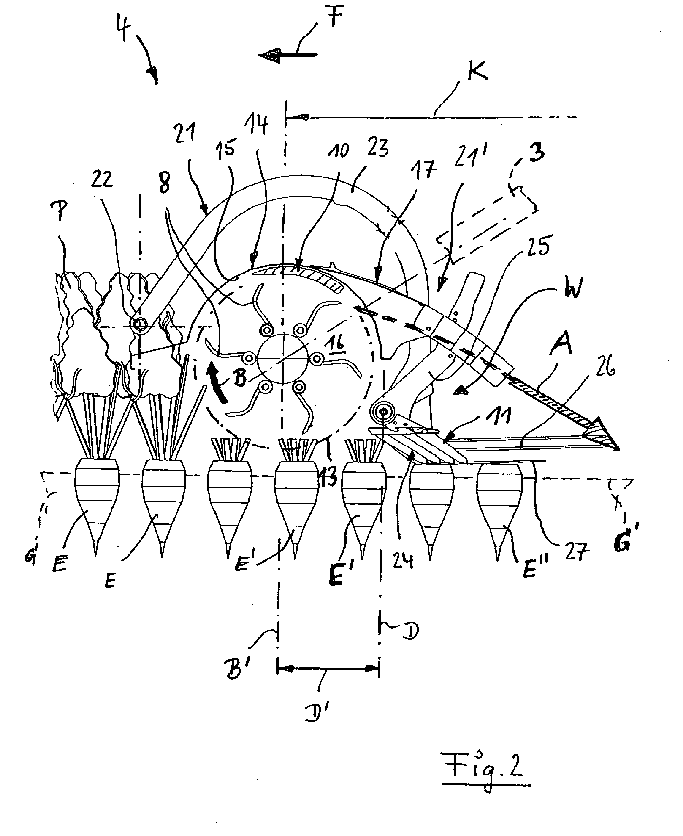

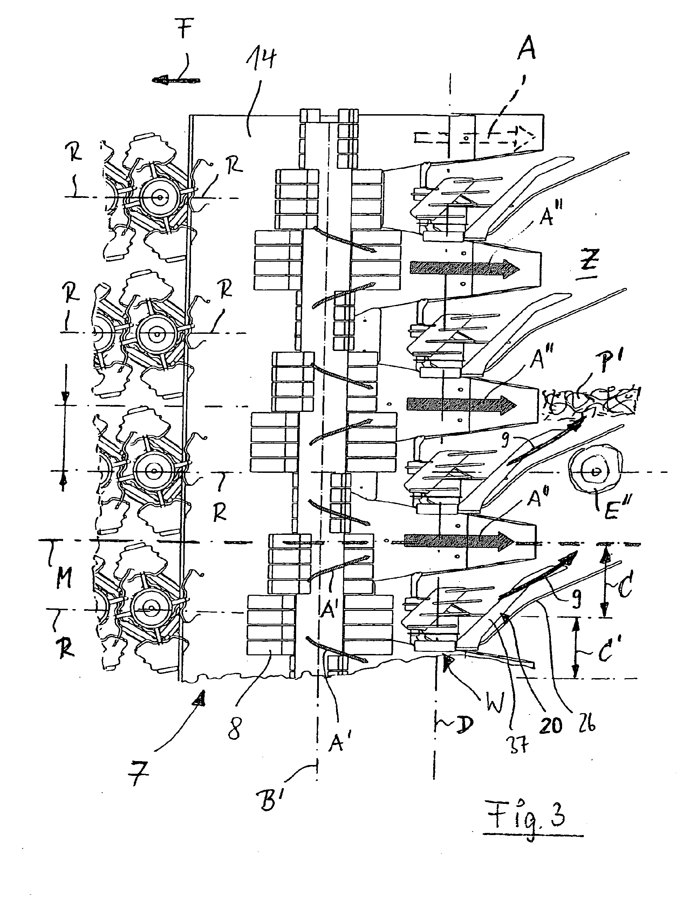

Das erfindungsgemäße Konzept der Rübenerntemaschine 1 sieht vor, dass die vom Blatthäcksler 7 erfassten Pflanzenteile P in einem allgemein mit A bezeichneten Förderstrom zusammengeführt werden und dieser bis hinter das zumindest eine nachfolgende Werkzeug W in Form eines Nachköpfers 11 verlagerbar ist (bogenförmige Pfeildarstellung in Fig. 2). In dieser Seitenansicht gemäß Fig. 2 wird dieses Prinzip einer mit Blick auf die System-Verbesserung optimierten Häckselgut-Führung an einem nur "einreihigen" Aggregat 4 gezeigt, wobei es sich versteht, dass sich entsprechend der mehrreihigen Anordnung mehrere in dieser Zeichnungsebene nicht sichtbare Baugruppen aneinanderreihen (Fig. 3 bis Fig. 6).

Diese Zusammenschau von Fig. 2 bis 6 mit jeweiliger Unteransicht bzw. Draufsicht verdeutlicht, wie der von mehreren Blatthäckslern 7 entsprechend einer Drehrichtung B jeweiliger Häckselelemente 8 (Fig. 2) gebildete Förderstrom A verlagert wird. Eine Einzelbetrachtung des Blatthäckslers 7 in Fig. 3 zeigt, dass diese Häckselgutförderung mit einem seitlichen Versatz C, C' zur jeweils durch eine Ebene R verdeutlichten Erntegut- bzw. Rübenreihe erfolgen kann. Damit wird zusätzliche zur Ableitung hinter den nachfolgend, in einer Querebene D (Fig. 3) gehaltenen Nachköpfer 11, eine gezielte Lage zwischen den Reihen erreichbar. In einfachster Ausführung (ohne wesentliche zusätzliche Steuerelemente) kann das vom Blatthäcksler 7 erfasste Pflanzenmaterial P oberhalb des nachgeordneten Nachköpfers 11 verlagert und als der Förderstrom A ausgeleitet werden.

Die mehrreihige Ausführung der Rübenerntemaschine 1 mit insbesondere sechs im wesentlichen spiegelsymmetrisch zur Maschinenlängsmittelebene M angeordneten Blatthäckslern 7 (Fig. 3 bis Fig. 6, Fig. 14) ist dabei so aufgebaut, dass der aus einer jeweiligen Rübenreihe R erzeugte Förderstrom A in mehrere Teilströme A' aufteilbar ist, diese hinter den dem Blatthäcksler 7 nachgeordneten Nachköpfer 11 verlagerbar und dabei als jeweilige Auslassströme A" der mehrreihigen Ausführung der Maschine 1 ausleitbar sind. Denkbar ist dabei auch, dass mehr als die zwei geteilten Förderströme A' gebildet werden (nicht dargestellt).

In der dargestellten vorteilhaften Ausführung wird der Förderstrom A in die beiden jeweils seitlich versetzt zur - der Rübenreihe R entsprechenden - Längsmittelebene der Blatthäcksler 7 verlaufenden Teilströme A' geteilt und deren auslassseitige Ablage erfolgt dabei in einen jeweiligen Zwischenraum Z der Rübenreihen R. Das in Fig. 2 mit E' bezeichnete Erntegut in den Reihen bleibt durch diesen Förderstrom sauber und wird nicht durch Häckselgut o. dgl. Verschmutzungen beeinflusst. Das Häckselgut wird hinter bereits geköpfte Teile E" als ein Grünband aus Pflanzenteilen P' auf dem Boden G' abgelegt, so dass damit auch ein zu Verstopfungen führendes "Aufschieben" der Pflanzenteile P' vermieden wird und das System verstopfungsfrei arbeitet.

Der Aufbau des Blatthäckslers 7 sieht außerdem vor, dass die vom nachgeordneten Nachköpfer 11 erfassten Teile, insbesondere beim Köpfschnitt erzeugte Rübenabschnitte (nicht dargestellt), mit dem Förderstrom A bzw. einem jeweiligen Teilförderstrom A' zusammengeführt werden können. In Fig. 3 ist mit einem Richtungspfeil 9 eine denkbare Verlagerung der nicht näher dargestellten Rübenabschnitte angedeutet, wobei diese mit den gehäckselten Pflanzenteilen P' der zusammengeführten Teilströme A' gemeinsam ablegbar sind.

Durch entsprechende konstruktive Gestaltung der Baugruppen, beispielsweise eines Abstandes D' (Fig. 2) des eine Querebene B' definierenden Blatthäckslers 7 vom die Ebene D bildenden Nachköpfer 11, ist die vorbeschriebene Rest-Materialablage weitgehend variabel, wobei denkbar ist, dass die Rübenabschnitte auf die bereits abgelegten Pflanzenteile P' auflegbar sind oder in das Gemisch des Förderstroms A eingeleitet werden. Diese bereits hinter dem zweiten Nachköpfer 11 abgelegten Pflanzenteile P' können für eine direkte Bodendüngung durch nachfolgende Druckelemente, Rollräder o. dgl. Teile der Erntemaschine 1 mit dem Boden G' verpresst werden (nicht dargestellt).

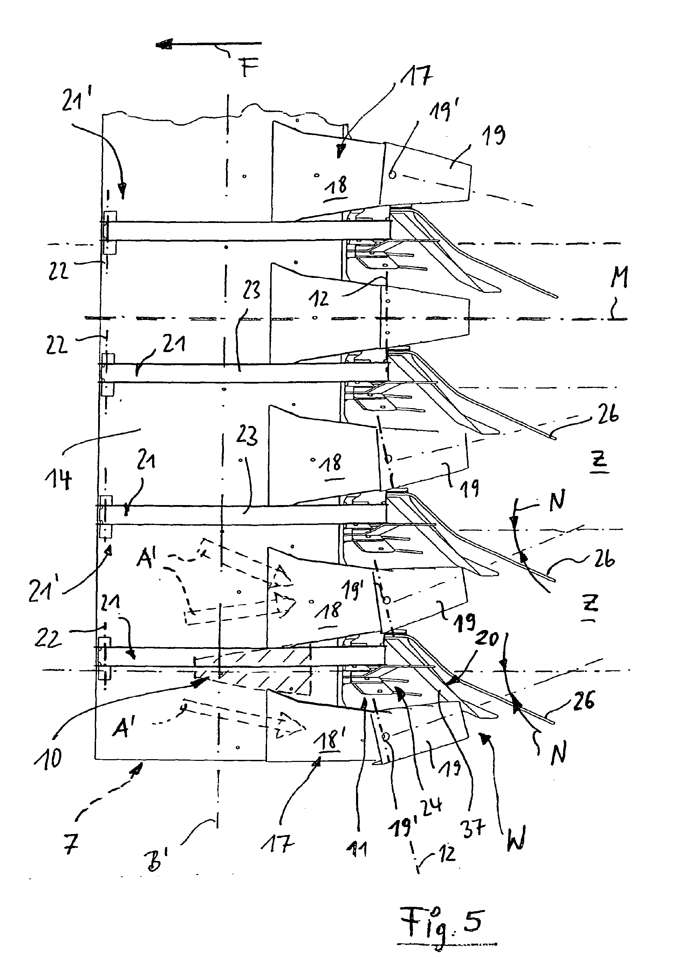

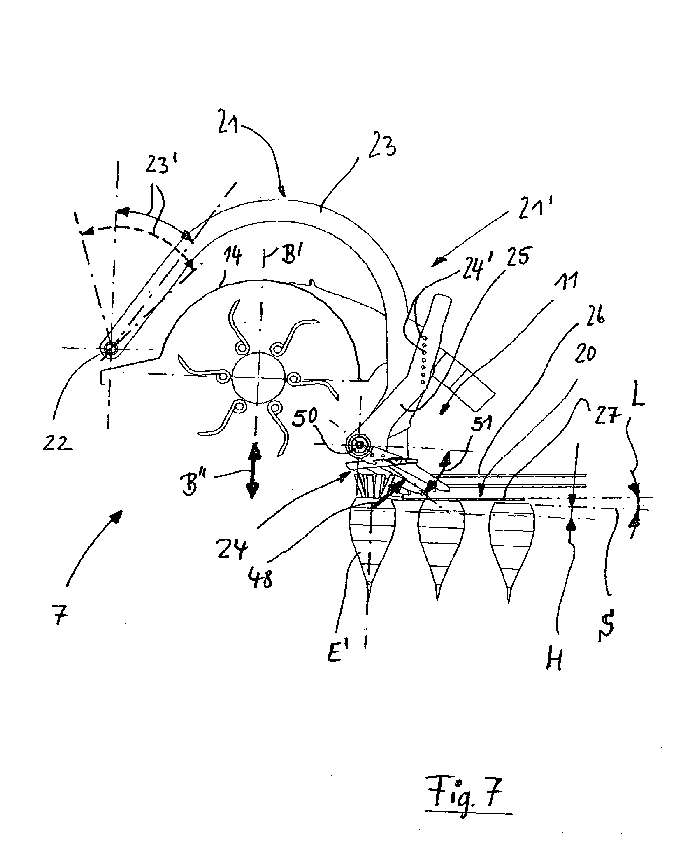

Für die vorbeschriebene Erzeugung der beiden Teilströme A' (Fig. 5) sind oberhalb der jeweiligen Blatthäcksler 7 (die in der Querebene B' auch höhenverstellbar gehalten sein können - Pfeil B", Fig. 7) in den nach hinten verlagerbaren Förderstrom A eingreifende Fördergutteiler 10 vorgesehen, deren Lage sich aus der Zusammenschau von Fig. 2 und Fig. 5 ergibt. Dabei wird auch deutlich, dass der Blatthäcksler 7 mit dem im Nahbereich zu diesem als zweites Werkzeug W angeordneten Nachköpfer 11 eine kompakte Köpfhäcksler-Baueinheit bildet, die eine vorteilhaft kurze Ausführung der Tragelemente 3 so ermöglicht, dass der mit einem (im Verhältnis zum Stand der Technik, Fig. 1, Abstand K') verkürzten Abstand K vorlaufende Blatthäcksler 7 besonders stabil am Maschinengestell 2 o. dgl. Baugruppe geführt werden kann und eine zusätzliche bodenseitige Abstützung des Aggregates mittels bisher vorgesehener Stützräder 49 o. dgl. (Fig. 1) entbehrlich ist. Diese Stützräder 49 wurden bei bekannten Systemen zum Anpressen des Häckselgutes P' genutzt.

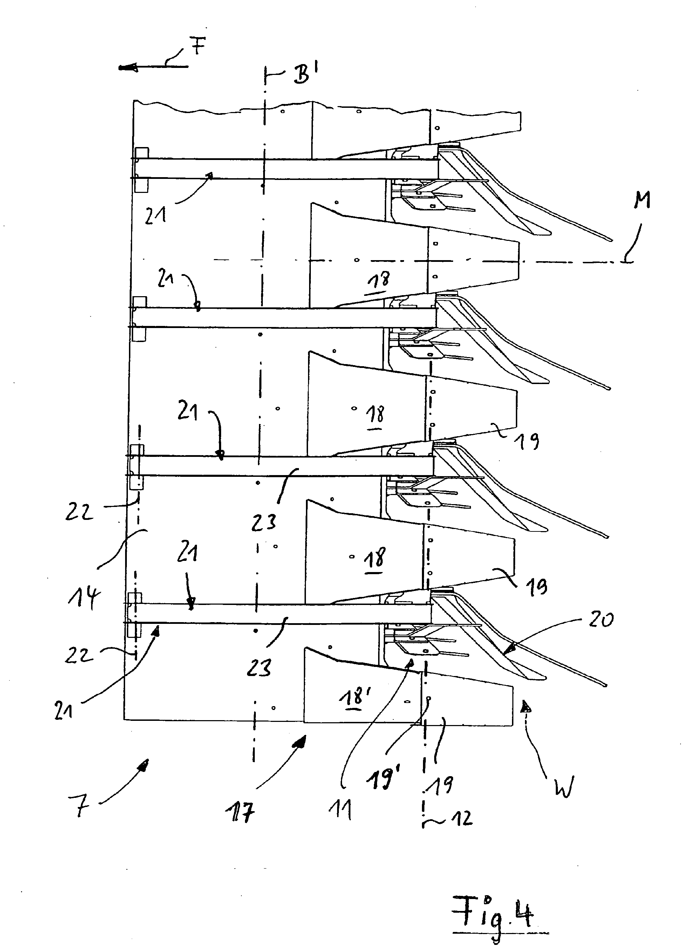

Der Nachköpfer 11 ist dabei unmittelbar hinter einem von den umlaufenden Häckselelementen 8 des Blatthäckslers 7 gebildeten Wirkbereich (Strich-Punkt-Linie 13, Fig. 2) so angeordnet, dass für den Förderstrom A ein kurzer Verlagerungsweg erreichbar ist. Diese Führungsbahn zeigt auch, dass der bzw. die Blatthäcksler 7 (Fig. 4) von einer Leitbaugruppe in Form einer Abdeckhaube 14 übergriffen sind und entlang deren Innenseite 15 die von den jeweiligen Häckselelementen 8 im Häckselraum 16 erfassten Pflanzenteile P' als der Förderstrom A verlagerbar sind.

Für die vorbeschriebene Ableitung des Förderstromes A ist die Abdeckhaube 14 im Bereich jedes der Blatthäcksler 7 mit zumindest einem hinteren Endstück 17 (Fig. 5) versehen, an dem entlang die Teilförderströme A' geführt sind. Dabei wird deutlich, dass in diesem Bereich der Fördergutteiler 10 vorgesehen ist und damit die beiden Teilströme A' in jeweils eines der Endstücke 17 paarweise eingeleitet werden können. Diese Endstücke 17 sind mit einem ortsfesten Führungsblech 18 versehen, an dem ein Auslassblech 19 schwenkbar gehalten ist (Stellphasen: Fig. 4, Fig. 5, Fig. 6).

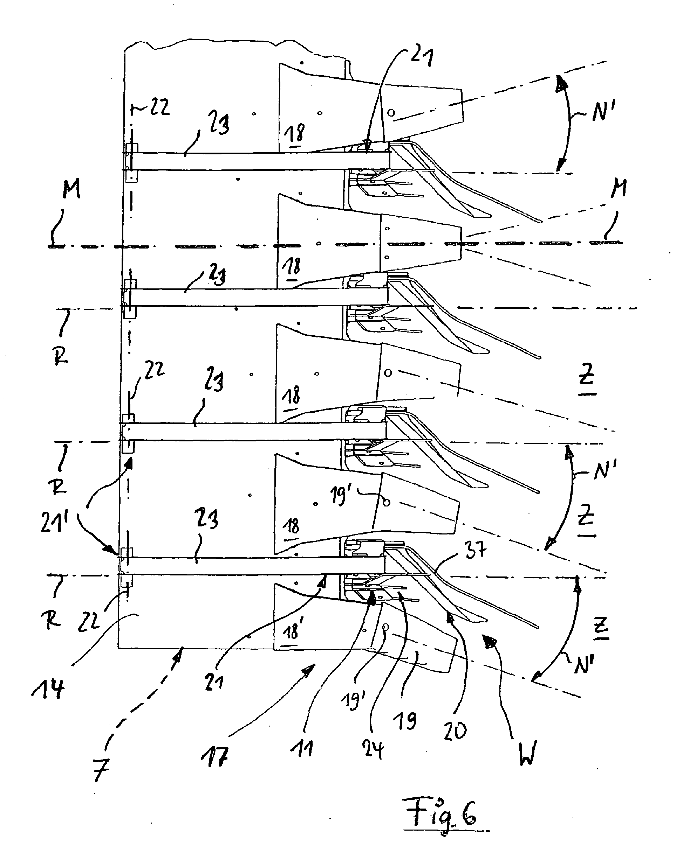

Mit dieser Konstruktion sind die Endstücke 17 bzw. deren U-förmige Auslassbleche 19 durch Schwenkung zumindest um eine vertikale Achse 19' auf unterschiedliche Auswurfrichtungen (Fig. 5, Fig. 6) einstellbar. Ebenso ist denkbar, dass die ein- oder mehrteilig ausführbaren Auslassbleche 19 um eine horizontale Achse 12 schwenkbar sind und damit die Auftreffstelle des Förderstroms A, A" auf dem Boden G' variiert wird.

In Fahrtrichtung F gesehen können diese Auslassbleche 19 zur Längsmittelebene M hin geneigt sein (Winkel N, Fig. 5) bzw. in eine mit einem Winkel N' in Fig. 6 gezeigte, nach außen gerichtete Spreizstellung verlagert werden. Diese beiden spitzwinkligen Leitstellungen N, N' bewirken über die Breite des Rodeaggregates eine entsprechende Konzentration der Pflanzenteile P' in den Zwischenräumen Z (N, Fig. 5) bzw. wird durch die in Fig. 6 gezeigte Verteilrichtung N' eine weitgehende Feinverteilung der Pflanzenteile P' auf dem Ackerboden erreicht.

Die Zusammenschau von Fig. 2 bis Fig. 10 verdeutlicht die erste Ausführung des Blatthäckslers 7, wobei dieser im Bereich des als zweites Werkzeug W vorgesehenen Nachköpfers 11 jeweils einen gezogenen Messerkopf 20 aufweist. Ebenso ist denkbar, den vorbeschriebenen Blatthäcksler 7 mit einer einen separaten Antrieb aufweisenden Köpfeinheit o. dgl. Aktivwerkzeug zu kombinieren (nicht dargestellt).

In den detaillierteren Einzeldarstellungen (vereinfachte Seitenansichten) gemäß Fig. 7, Fig. 9 und Fig. 10 wird deutlich, dass dieser Nachköpfer 11 mittels einer einen die Abdeckhaube 14 vorderseitig übergreifenden Träger 21 aufweisenden Tragbaugruppe 21' in der im wesentlichen von der Mitte der Rübenreihe vorgegebenen Längsebene R gehalten ist (Fig. 5). Dabei ist der Träger 21 als ein insbesondere um eine vordere Halteachse 22 schwenkbarer Pendelarm 23 ausgebildet (Schwenkwinkel 23'), der im Nahbereich des Blatthäckslers 7 bzw. des nachgeordneten Messerkopfes 20 mit einem die jeweilige vorbearbeitete Rübe E' berührenden Tastkamm 24 zusammenwirkt.

Die Verbindung des Tastkammes 24 zum Pendelarm 23 ist dabei so aufgebaut, dass zumindest eine jeweilige horizontale Schnittebene S des Messerkopfes 20 mittels des Tastkammes 24 vorgebbar ist. Durch spezielle Verbindungsteile im Bereich der Tragbaugruppe 21' kann die jeweilige Arbeitslage des Messers 20 bzw. dessen Schnittebene S - beispielsweise deren Schnitthöhe H bzw. Schnitt-Winkel L - weitgehend variabel eingestellt werden. Für diese variablen Einstellungen ist der Tastkamm 24 an einem von dem am Pendelarm 23 gehaltenen Messerkopf 20 unabhängig einstellbaren Stellhebel 25 festlegbar (Fig. 2, Fig. 7). Diese Einstellbarkeit ist durch jeweilige unterschiedliche Haltepositionen des Tastkammes 24 vorgebende Verbindungspunkte 24' in Fig. 7 gezeigt.

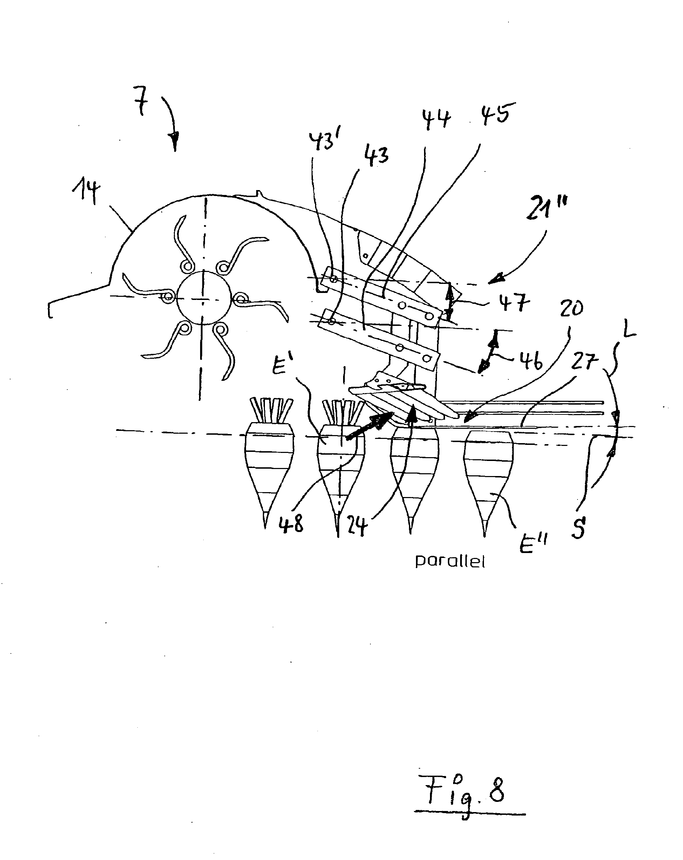

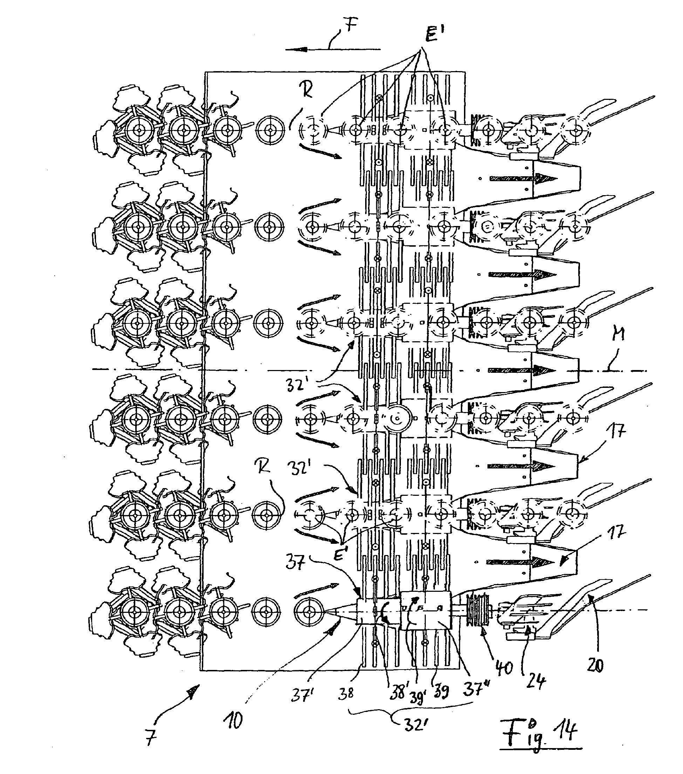

Außerdem ist zur Verlagerung des vom Erntegut E' getrennten Rübenabschnittes im Nahbereich des Messerkopfes 20 eine den Rübenabschnitt in den Zwischenraum Z verlagernde Leitfeder 26 vorgesehen. In den gemäß Fig. 7 und Fig. 8 dargestellten Ausführungen des Nachköpfers 11 ist im Bereich des Messerkopfes 20 ein spitzwinklig zur Schnittebene ausrichtbares Blattmesser 27 vorgesehen, dessen Schnittlage sich aus der Draufsicht gemäß Fig. 5 bzw. Unteransicht gemäß Fig. 14 ergibt (Winkel 37' zur Fahrtrichtung F). Die Wirkung des in einem Gelenkpunkt 50 am Stellhebel 25 gehaltenen Tastkammes 24, dessen Einbaulage auch im Bereich eines Winkels 51 einstellbar ist, wird durch einen Druckpfeil 48 verdeutlicht (Fig. 7, Fig. 8).

In Fig. 8 ist eine Tragbaugruppe 21" mit zwei im Bereich des Blatthäckslers 7 parallele Halteachsen 43, 43' aufweisenden Tragbalken 44, 45 vorgesehen. Diese sind um jeweilige Schwenkwinkel 46 bzw. 47 verlagerbar, so dass die an den Tragbalken 44, 45 gehaltenen Teile des Tastkammes 24 bzw. des Messerkopfes 20 auf die entsprechenden Schnittbedingungen (z. B. Pfeil 48: Anlagedruck des Tastkammes 24) einstellbar sind. Damit ist eine Konstruktion gezeigt, bei der der Pendelarm 23 (Fig. 7) entbehrlich ist.

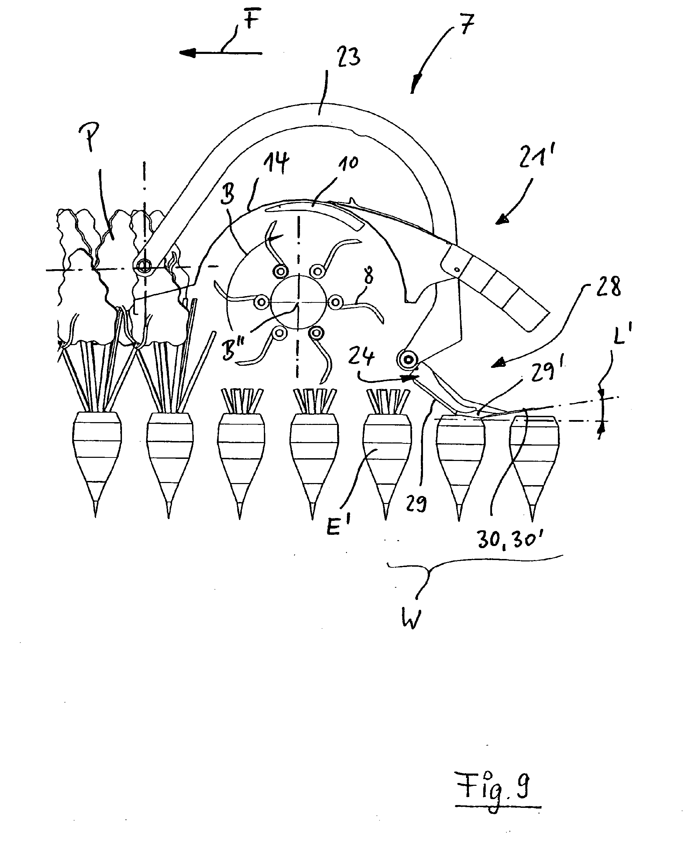

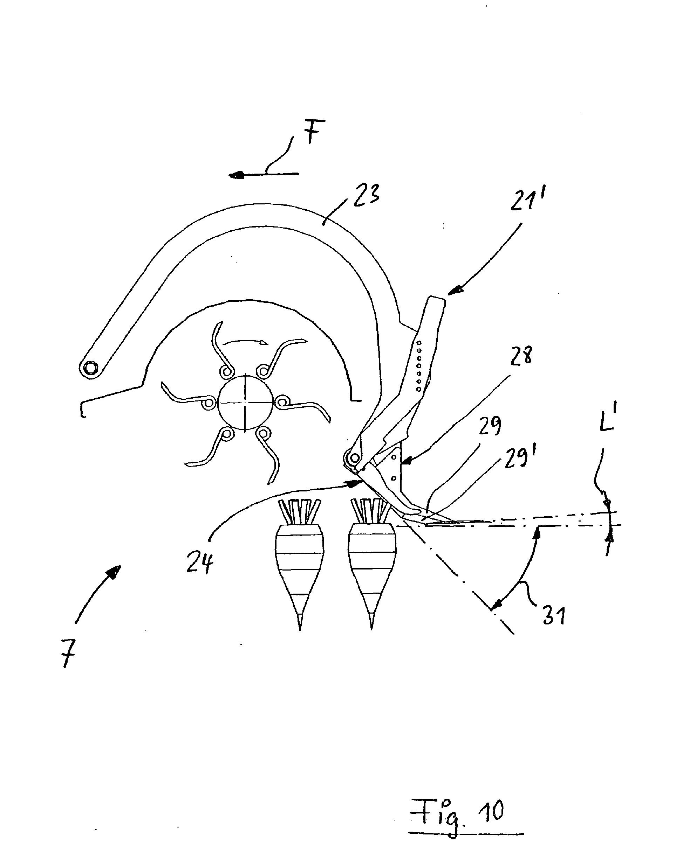

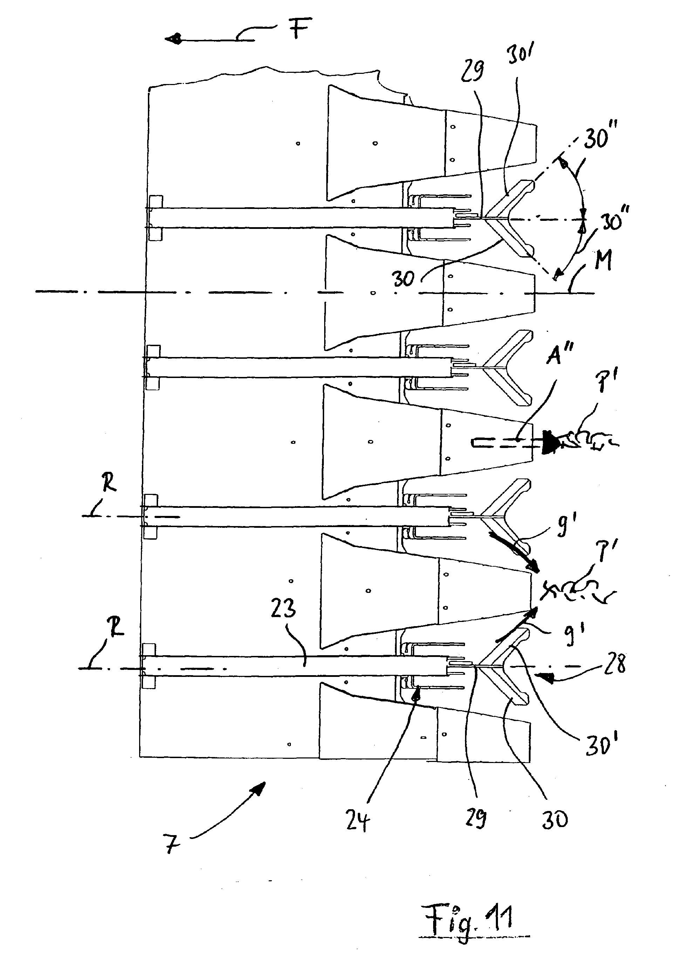

In den Darstellungen gemäß Fig. 9 bis Fig. 11 ist eine zweite Ausführung des Messerkopfes ähnlich Fig. 7 mit einem am Pendelarm 23 gehaltenen mehrschneidigen Flügelmesser 28 gezeigt, wobei dieses ein im wesentlichen in der Längsebene der Rübenreihe R ausrichtbares Vertikalschnittmesser 29 und beidseits zu diesem jeweils ein Horizontalmesser 30, 30' aufweist (Fig. 11). In der Seitenansicht gemäß Fig. 10 wird deutlich, dass das Vertikalschnittmesser 29 einen in Fahrtrichtung F geneigten Anstellwinkel 31 aufweist, wobei dieser wahlweise zwischen 5° bis 85°, vorzugsweise 45°, betragen kann. Mit dieser Ausführung des Vertikalschnittmessers 29 wird der gleichzeitig von den Horizontalmessern 30, 30' getrennte Rübenabschnitt (nicht dargestellt) in Längsrichtung R zusätzlich geteilt, so dass zwei kleinere Teilstücke zur besseren Verteilung entstehen.

In Fig. 11 ist in einer Draufsicht die flügelförmige Ausbildung der beiden Horizontalmesser 30, 30' gezeigt, wobei diese von der Ebene R bzw. der Schnittebene des Vertikalschnittmessers 29 spitzwinklig so abgespreizt sind, dass die Rübenabschnitte gemäß Richtungspfeilen 9' zum Bereich der Pflanzenreste P' hin abgeleitet werden. Mit 29' ist in Fig. 10 eine zusätzliche Schneidfase am Messer 29 bezeichnet.

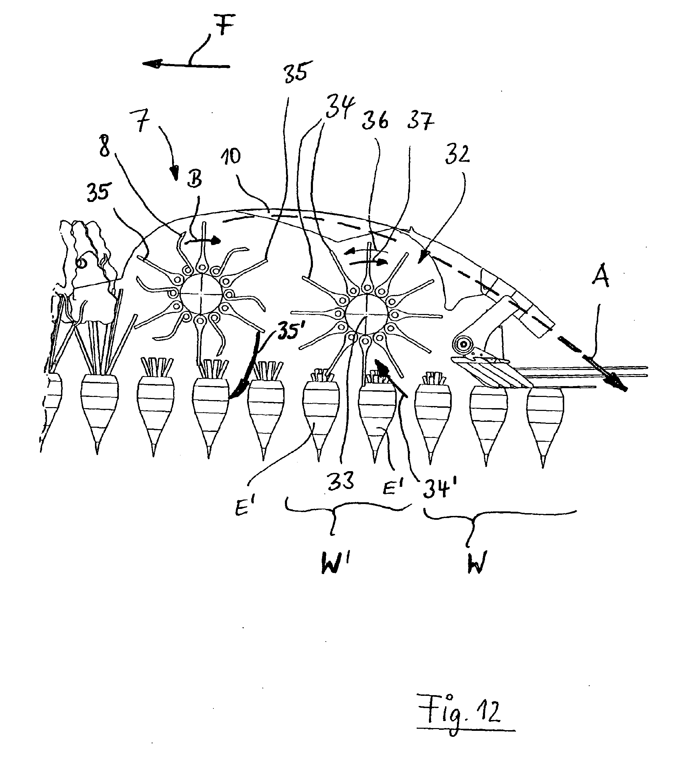

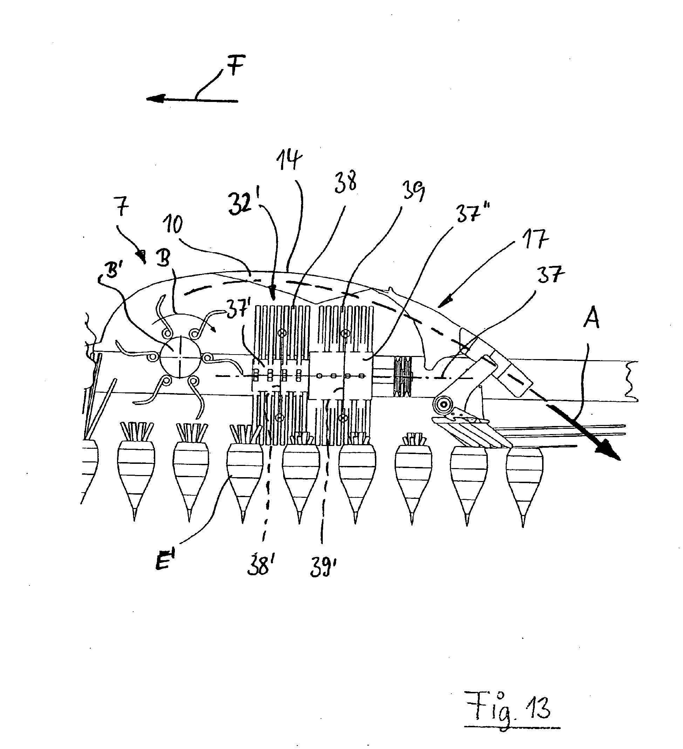

In Fig. 12 und 13 sind zwei ähnliche Konstruktionen einer zweiten Ausführungsform des Blatthäckslers 7 bzw. der aus diesem und dem das Werkzeug W bildenden Nachköpfer 11 bestehenden Baueinheit dargestellt. Zusätzlich ist hier im Bereich zwischen dem Blatthäcksler 7 und dem Nachköpfer 11 als drittes Werkzeug W' eine allgemein mit 32 bezeichnete Putzvorrichtung vorgesehen. Die beiden Ausführungen der Putzvorrichtung 32 (Fig. 12) und 32' (Fig. 13) zeigen, dass hier der vom Blatthäcksler 7 erzeugte Förderstrom A mit Pflanzenteilen P auch über die Putzvorrichtung 32, 32' hinweg in die bis hinter den Nachköpfer 11 reichenden Endstücke 17 der Abdeckhaube 14 geleitet und erst danach auf dem Boden G abgelegt wird. Zur Erzielung der vorstehend bereits beschriebenen Teilströme A' (Fig. 5) erstreckt sich der Fördergutteiler 10 an der Innenseite 15 der Abdeckhaube 14 zwischen dem Blatthäcksler 7 und der diesem nachgeordneten Putzvorrichtung 32 bzw. 32'.

In der Darstellung gemäß Fig. 12 ist die Putzvorrichtung 32 in einer Ausbildung als Längsputzer veranschaulicht, wobei dieser eine im wesentlichen quer zur Fahrtrichtung F verlaufende Drehachse 33 aufweist. Entsprechend eines konstruktiv variabel installierbaren Antriebskonzeptes (nicht näher dargestellt) kann der Längsputzer bzw. können dessen Putzelemente 34 in bzw. entgegen dem Uhrzeigersinn drehbar ausgeführt sein (Pfeil 36 bzw. 37).

In vorteilhafter Ausführung sind die Putzelemente 34 des Längsputzers 32 so ausgeführt, dass diese mit jeweiligen auf dem vorgeordneten Blatthäcksler 7 vorgesehenen Zusatzputzern 35 (zusätzlich zu den Häckselelementen 8) wirksam werden. Die Putzelemente 34 werden insbesondere in der entgegen der Drehrichtung B des Blatthäckslers 7 verlaufenden Drehrichtung 36 angetrieben. Dadurch wird erreicht, dass das Erntegut E' in einer ersten Phase in einer Pfeilrichtung 35' gesäubert wird (Zusatzputzer 35') und danach eine Säuberung in Pfeilrichtung 34' (Putzelemente 34) wirksam ist. Damit ist eine beidseitige Reinigung des Erntegutes E' gewährleistet, wobei Welkblätter, Erdreste u. dgl. anhaftende Teile weitgehend voll umfänglich vom oberen Bereich des Erntegutes E' abgetragen werden und dieses optimal für den nachfolgenden Köpfschnitt vorbereitet ist.

Die vorbeschriebenen Putzelemente 34 und/oder die Zusatzputzer 35 des Blatthäckslers 7 sind in zweckmäßiger Ausführung aus einem gummielastischen Material gefertigt. Ebenso ist denkbar, härtere Strukturen bei diesem Putzvorgang des Rübenkopfes einzusetzen, da der vom Köpfschnitt erfasste Rübenabschnitt als ein nicht zur Weiterverarbeitung vorgesehenes Abfallteil auch aggressivere Kratzspuren aufweisen kann.

In Fig. 13 und 14 ist eine zweite Ausführung der Putzvorrichtung 32' gezeigt, wobei diese als ein eine in Fahrtrichtung F verlaufende Drehachse 37 aufweisender Quer putzer ausgebildet ist. In der dargestellten Ausführung weist der Querputzer zwei auf jeweiligen Abschnitten 37', 37" der Drehachse 37 hintereinander angeordnete Putzsegmente 38, 39 auf. Die auf den beiden Abschnitten 37', 37" der Drehachse 37 befindlichen Putzsegmente 38, 39 können dabei durch eine entsprechende Steuerung (nicht näher dargestellt) unterschiedlich bewegbar sein. Insbesondere ist vorgesehen, dass die beiden Putzsegmente 38, 39 mit einer gegensinnigen Drehrichtung (Pfeil 38', Pfeil 39') antreibbar sind, so dass die Reinigung des Erntegutes E' weitgehend vollständig an dessen Oberseite erreicht wird. Ebenso ist denkbar, dass die Putzelemente 38, 39 in Richtung der Drehachse 37 und/oder quer zu dieser verlagerbar sind (nicht dargestellt).

In Fig. 14 ist eine Unteransicht von mehreren Querputzern 32' in der 6-reihigen Anordnung der Maschine gezeigt, wobei deutlich wird, dass die Putzvorrichtungen 32' jeweils im wesentlichen zwischen den beiden Endstücken 17 benachbarter Blatthäcksler 7 am hinteren Ende der Abdeckhaube 14 angeordnet ist. Damit kann das System durch einen Keilwellenantrieb 40 o. dgl. Verbindungsbauteile für den Drehantrieb besonders einfach von oben erreicht werden.

In Zusammenschau sämtlicher der vorbeschriebenen Konstruktionen versteht es sich, dass die - gemäß Fig. 12 bis 14 gezeigten - Baueinheiten für eine 6-reihige Ausführung ausgebildete Baugruppen aufweisen, wobei diese im wesentlichen spiegelsymmetrisch zur Längsmittelebene M der jeweiligen Maschine angeordnet sind. Sämtliche Baugruppen sind dabei an einem nicht näher dargestellten gemeinsamen Rahmenteil 3 bzw. 42 (Fig. 13) festlegbar und mit dem Maschinenrahmen 2 verbindbar. Diese Systeme weisen dabei auch eine zumindest die auf einer gemeinsamen Antriebsachse B' befindlichen Blatthäcksler 7 betätigende Antriebsverbindung auf (nicht näher dargestellt). Ebenso ist denkbar, dass zur Betätigung der Putzvorrichtung(en) 32, 32', 32" eine vom Blatthäcksler 7 abgezweigte Antriebsverbindung oder zumindest ein separates Antriebsorgan vorgesehen werden kann (ebenfalls nicht dargestellt).

## Patentansprüche

1. Rübenerntemaschine für Zuckerrüben o. dgl. Erntegut (E), mit einem Rübenblätter, Grünwuchs u. dgl. Pflanzenteile (P) von dem insbesondere mehrreihigen Erntegut (E) entfernenden und zwischen den Reihen (R) ablegenden Blatthäcksler (7), wobei in Fahrtrichtung (F) hinter dessen Häckselelement (8) zumindest ein Nachköpfer vorgesehen ist, **dadurch gekennzeichnet, dass** die vom Blatthäcksler (7) erfassten Pflanzenteile (P) einen im wesentlichen bis hinter den Nachköpfer verlagerbaren Förderstrom (A) bilden, derart, dass mittels des nach Art einer Überbrückung zumindest bis hinter den Nachköpfer (11) abgeleiteten Förderstromes (A, A', A") zumindest an jeweiligen von dem Nachköpfer (11) in einer Köpfphase erfassbaren Rübenköpfen (E) Verschmutzungen vermeidbar sind.

2. Rübenerntemaschine nach Anspruch 1, **dadurch gekennzeichnet, dass** der vom Blatthäcksler (7) gebildete Förderstrom (A) entgegen der Fahrtrichtung (F) verlagerbar und mit seitlichem Versatz (D) zur jeweiligen Rübenreihe (R) hinter den Nachköpfer (11) ableitbar ist.

3. Rübenerntemaschine nach Anspruch 1 oder 2, **dadurch gekennzeichnet, dass** der vom Blatthäcksler (7) erzeugte Förderstrom (A) im wesentlichen oberhalb des Nachköpfers (11) verlagerbar ist.

4. Rübenerntemaschine nach einem der Ansprüche 1 bis 3, **dadurch gekennzeichnet, dass** der aus einer jeweiligen Rübenreihe (R) erzeugte Förderstrom (A) in mehrere Teilströme (A') aufteilbar ist und diese hinter den dem Blatthäcksler (7) nachgeordneten Nachköpfer (11) verlagerbar sind.

5. Rübenerntemaschine nach einem der Ansprüche 1 bis 4, **dadurch gekennzeichnet, dass** der Förderstrom (A) in zwei jeweils einen seitlichen Versatz (C, C') zur Längsmittelebene (R) des jeweiligen Blatthäckslers (7) aufweisende Teilströme (A') teilbar ist und diese hinter dem nachgeordneten Nachköpfer (11) in jeweilige Ablage- bzw. Zwischenräume (Z) neben der/den Rübenreihe(n) (E') einleitbar sind.

6. Rübenerntemaschine nach einem der Ansprüche 1 bis 5, **dadurch gekennzeichnet, dass** vom Nachköpfer (11) erfasste Teile, insbesondere beim Köpfschnitt erzeugte Rübenabschnitte, mit dem Förderstrom (A) bzw. einem jeweiligen Teilförderstrom (A') zusammenführbar sind.

7. Rübenerntemaschine nach Anspruch 6, **dadurch gekennzeichnet, dass** die Rübenabschnitte und gehäckselte Pflanzenteile (P') eines Teilstromes (A') gemeinsam ablegbar sind.

8. Rübenerntemaschine nach Anspruch 6 oder 7, **dadurch gekennzeichnet, dass** die Rübenabschnitte auf die bereits abgelegten Pflanzenteile (P') auflegbar sind.

9. Rübenerntemaschine nach einem der Ansprüche 1 bis 8, **dadurch gekennzeichnet, dass** der oberhalb des Blatthäckslers (7) nach hinten verlagerbare Förderstrom (A) mittels eines Fördergutteilers (10) in die zwei Teilströme (A') teilbar ist.

10. Rübenerntemaschine nach einem der Ansprüche 1 bis 9, **dadurch gekennzeichnet, dass** der Blatthäcksler (7) mit dem im Nahbereich zu diesem angeordneten Nachköpfer (11) als zweites Werkzeug (W) eine kompakte Köpfhäcksler-Baueinheit bildet.

11. Rübenerntemaschine nach Anspruch 10, **dadurch gekennzeichnet, dass** der Nachköpfer (11) unmittelbar hinter dem Wirkbereich (13) umlaufender Häckselelemente (8) des Blatthäckslers (7) angeordnet ist.

12. Rübenerntemaschine nach Anspruch 10 oder 11, **dadurch gekennzeichnet, dass** zumindest der Blatthäcksler (7) von einer Leitbaugruppe in Form einer Abdeckhaube (14) übergriffen ist, entlang deren Innenseite (15) die von den jeweiligen Häckselelementen (8) im Häckselraum (16) erfassten Pflanzenteile (P) als der Förderstrom (A, A') verlagerbar sind.

13. Rübenerntemaschine nach einem der Ansprüche 10 bis 12, **dadurch gekennzeichnet, dass** die als Leitbaugruppe für den Förderstrom (A, A') vorgesehene Abdeckhaube (14) mit zumindest einem hinteren Endstück (17) versehen ist.

14. Rübenerntemaschine nach einem der Ansprüche 10 bis 13, **dadurch gekennzeichnet, dass** der vom Blatthäcksler (7) erzeugte Förderstrom (A) im Bereich des Fördergutteilers (10) in die zwei zu jeweils einem der Endstücke (17) hin leitbaren Teilströme (A') teilbar ist.

15. Rübenerntemaschine nach einem der Ansprüche 10 bis 14, **dadurch gekennzeichnet, dass** die Endstücke (17) der Abdeckhaube (14) auf unterschiedliche Auswurfrichtungen einstellbar sind.

16. Rübenerntemaschine nach einem der Ansprüche 10 bis 15, **dadurch gekennzeichnet, dass** die Endstücke (17) der Abdeckhaube (14) in jeweilige zur Fahrtrichtung (F) spitzwinklige Leitstellungen (N, N') verlagerbar sind.

17. Rübenerntemaschine nach einem der Ansprüche 1 bis 16, **dadurch gekennzeichnet, dass** der Blatthäcksler (7) mit einem einen gezogenen Messerkopf (20) aufweisenden Nachköpfer (11) zusammenwirkt.

18. Rübenerntemaschine nach Anspruch 17, **dadurch gekennzeichnet, dass** der Nachköpfer (11) mittels einer die Abdeckhaube (14) vorderseitig übergreifenden Trägerbaugruppe (21') in einer im wesentlichen von der Mitte der Rübenreihe vorgegebenen Längsebene (R) gehalten ist.

19. Rübenerntemaschine nach Anspruch 17 oder 18, **dadurch gekennzeichnet, dass** die Trägerbaugruppe (21') einen um eine vordere Halteachse (22) schwenkbaren Pendelarm (23) aufweist, der im Nahbereich des Messerkopfes (20) mit einem Tastkamm (24) zusammenwirkt.

20. Rübenerntemaschine nach einem der Ansprüche 17 bis 19, **dadurch gekennzeichnet, dass** zumindest die jeweilige horizontale Schnittebene (S) des Messerkopfes (20) mittels des Tastkammes (24) vorgebbar ist.

21. Rübenerntemaschine nach einem der Ansprüche 17 bis 20, **dadurch gekennzeichnet, dass** die Schnittebene (S) des Messerkopfes (20) mittels des Tastkammes (24) veränderbar ist.

22. Rübenerntemaschine nach einem der Ansprüche 17 bis 21, **dadurch gekennzeichnet, dass** der Tastkamm (24) an einem von dem am Pendelarm (23) gehaltenen Messerkopf (20) unabhängigen Stellhebel (25; 44) festlegbar ist.

23. Rübenerntemaschine nach einem der Ansprüche 17 bis 22, **dadurch gekennzeichnet, dass** im Nahbereich des Messerkopfes (20) eine den Rübenabschnitt in den Zwischenraum (Z) verlagernde Leitfeder (26) vorgesehen ist.

24. Rübenerntemaschine nach einem der Ansprüche 17 bis 23, **dadurch gekennzeichnet, dass** der Messerkopf (20) mit einem spitzwinklig (L) zur Schnittebene (S) ausrichtbaren Blattmesser (27) versehen ist.

25. Rübenerntemaschine nach einem der Ansprüche 17 bis 24, **dadurch gekennzeichnet, dass** der Messerkopf (20) mit einem mehrschneidigen Flügelmesser (28) versehen ist.

26. Rübenerntemaschine nach Anspruch 25, **dadurch gekennzeichnet, dass** das Flügelmesser (28) ein im wesentlichen in der Längsebene (R) der Rübenreihe ausrichtbares Vertikalschnittmesser (29) und beidseits zu diesem jeweils ein Horizontalmesser (30, 30') aufweist.

27. Rübenerntemaschine nach Anspruch 25 oder 26, **dadurch gekennzeichnet, dass** das Vertikalschnittmesser (29) einen in Fahrtrichtung (F) geneigten Anstellwinkel (31) aufweist.

28. Rübenerntemaschine nach Anspruch 26, **dadurch gekennzeichnet, dass** der Anstellwinkel (31) jeweils 5° bis 85°, vorzugsweise 45°, beträgt.

29. Rübenerntemaschine nach einem der Ansprüche 25 bis 28, **dadurch gekennzeichnet, dass** die Horizontalmesser (30, 30') flügelförmig (Winkel 30") von der Längsebene (R) abgespreizt sind und zur Schnittebene (S) mit einem spitzen Winkel (L) ausrichtbar sind.

30. Rübenerntemaschine nach einem der Ansprüche 1 bis 16, **dadurch gekennzeichnet, dass** die Köpfhäcksler-Baueinheit im Bereich zwischen Blatthäcksler (7) und Nachköpfer (11) mit einer Putzvorrichtung (32, 32') versehen ist.

31. Rübenerntemaschine nach Anspruch 30, **dadurch gekennzeichnet, dass** der vom Blatthäcksler (7) erzeugte Förderstrom (A) über die Putzvorrichtung (32, 32') hinweg in die bis hinter den Nachköpfer (11) reichenden Endstücken (17) der Abdeckhaube (14) einleitbar ist.

32. Rübenerntemaschine nach Anspruch 30 oder 31, **dadurch gekennzeichnet, dass** sich der Fördergutteiler (10) an der Innenseite (15) der Abdeckhaube (14) zwischen Blatthäcksler (7) und Putzvorrichtung (32, 32') erstreckt.

33. Rübenerntemaschine nach einem der Ansprüche 30 bis 32, **dadurch gekennzeichnet, dass** in Querrichtung der Maschine (1) die Putzvorrichtungen (32, 32') jeweils im wesentlichen zwischen den beiden Endstücken (17) benachbarter Blatthäcksler (7) nahe dem hinteren Ende (19) der Abdeckhaube (14) angeordnet sind.

34. Rübenerntemaschine nach einem der Ansprüche 30 bis 33, **dadurch gekennzeichnet, dass** die Putzvorrichtung (32) als ein eine quer zur Fahrtrichtung (F) verlaufende Drehachse (33) aufweisender Längsputzer ausgebildet.

35. Rübenerntemaschine nach Anspruch 35, **dadurch gekennzeichnet, dass** der Längsputzer in bzw. entgegen dem Uhrzeigersinn (Pfeil 36, 37) drehbare Putzelemente (34) aufweist.

36. Rübenerntemaschine nach Anspruch 34 oder 35, **dadurch gekennzeichnet, dass** die Putzelemente (34) des Längsputzers mit jeweiligen auf dem vorgeordneten Blatthäcksler (7) vorgesehenen Zusatzputzern (35) zusammenwirken.

37. Rübenerntemaschine nach einem der Ansprüche 34 bis 36, **dadurch gekennzeichnet, dass** die Putzelemente (34) des Längsputzers mit entgegengesetzter Drehrichtung (36) zum Blatthäcksler (7) umlaufen.

38. Rübenerntemaschine nach einem der Ansprüche 34 bis 37, **dadurch gekennzeichnet, dass** der Blatthäcksler (7) im Nahbereich seiner Häckselelemente (8) jeweils einen der Zusatzputzer (35) aufweist.

39. Rübenerntemaschine nach einem der Ansprüche 34 bis 38, **dadurch gekennzeichnet, dass** die Putzelemente (34) und/oder die Zusatzputzer (35) aus einem gummielastischen Material bestehen.

40. Rübenerntemaschine nach einem der Ansprüche 30 bis 33, **dadurch gekennzeichnet, dass** die Putzvorrichtung (32') mit zumindest einem eine in Fahrtrichtung (F) verlaufende Drehachse (37) aufweisenden Querputzer versehen ist.

41. Rübenerntemaschine nach Anspruch 40, **dadurch gekennzeichnet, dass** der Querputzer mit zwei auf jeweiligen Abschnitten (37', 37") der Drehachse (37) hintereinander angeordneten Putzsegmenten (38, 39) versehen ist.

42. Rübenerntemaschine nach Anspruch 40 oder 41, **dadurch gekennzeichnet, dass** die beiden die Putzsegmente (38, 39) aufnehmenden Abschnitte (37', 37") unterschiedlich steuerbar sind.

43. Rübenerntemaschine nach einem der Ansprüche 40 bis 42, **dadurch gekennzeichnet, dass** die beiden Putzsegmente (38, 39) mit gegensinniger Drehrichtung (38', 39') antreibbar sind.

44. Rübenerntemaschine nach einem der Ansprüche 40 bis 43, **dadurch gekennzeichnet, dass** die Putzelemente (38, 39) in Richtung der Drehachse (37) verlagerbar sind.

45. Rübenerntemaschine nach einem der Ansprüche 1 bis 44, **dadurch gekennzeichnet, dass** deren Köpfhäcksler- bzw. Reinigungs-Baueinheiten für eine 6-reihige Ausführung im wesentlichen spiegelsymmetrisch zu einer Längsmittelebene (M) der Maschine (1) angeordnete Baugruppen aufweisen.

46. Rübenerntemaschine nach Anspruch 45, **dadurch gekennzeichnet, dass** die Baugruppen jeweils an einem gemeinsamen Rahmenteil (3, 42') festlegbar sind und an diesem eine zumindest die auf einer gemeinsamen Antriebswelle (42) befindlichen Blatthäcksler (7) betätigende Antriebsverbindung vorgesehen ist.

47. Rübenerntemaschine nach Anspruch 45 oder 46, **dadurch gekennzeichnet, dass** zur Betätigung der Putzvorrichtung(en) (32, 32') eine von den Blatthäcksler(n) (7) abgezweigte Antriebsverbindung oder zumindest ein separates Antriebsorgan vorgesehen ist.

## Claims

1. Beet harvester for sugar beet and similar harvested crops (E), having a defoliator (7) which rests down between the rows (R) and which removes beet leaves, vegetation and similar plant parts (P) from the harvested crop (E), of which latter there are, in particular, multiple rows, there being provided, downstream of the defoliating member (8) of the defoliator (7) in the direction of travel (F), at least one post-topper, **characterised in that** the plant parts (P) which are taken hold of by the defoliator (7) form a fed flow (A) which can be displaced to a point substantially downstream of the post-topper (11), in such a way that, by means of the fed flow (A, A', A"), which can be diverted at least to a point downstream of the post-topper (11) as a sort of bypass flow, contaminating material can be avoided on individual beets (E) which can be taken hold of by the post-topper (11) in a topping phase.

2. Beet harvester according to claim 1, **characterised in that** the fed flow (A) created by the defoliator (7) can be displaced in the opposite direction to the direction of travel (F) and can be diverted to a point downstream of the post-topper (11) with a lateral offset (D) from the given row (R) of beets.

3. Beet harvester according to claim 1 or 2, **characterised in that** the fed flow (A) produced by the defoliator (7) can be displaced substantially above the post-topper (11).

4. Beet harvester according to one of claims 1 to 3, **characterised in that** the fed flow (A) produced from a given row (R) of beets can be divided into a plurality of sub-flows (A') and these can be displaced to a point downstream of the post-topper (11) positioned downstream of the defoliator (7).

5. Beet harvester according to one of claims 1 to 4, **characterised in that** the fed flow (A) can be divided into two sub-flows (A') which have respective lateral offsets (C, C') from the longitudinal centre plane (R) of the given defoliator (7) and, downstream of the post-topper (11) positioned downstream, these sub-flows (A') can be conducted into respective spaces for deposition or gaps (Z) next to the row(s) of beets (E').

6. Beet harvester according to one of claims 1 to 5, **characterised in that** parts taken hold of by the post-topper (11), and in particular cut-off pieces of beet produced by the topping cut, can be combined with the fed flow (A) or a given sub-flow (A').

7. Beet harvester according to claim 6, **characterised in that** cut-off pieces of beet and plant parts (P') chopped off by the defoliation which are both in a sub-flow (A') can be deposited together.

8. Beet harvester according to claim 6 or 7, **characterised in that** the cut-off pieces of beet can be put down on the plant parts (P') which have already been deposited.

9. Beet harvester according to one of claims 1 to 8, **characterised in that** the fed flow (A) which is displaced backwards above the defoliator (7) can be divided into the two sub-flows (A') by means of a divider (10) of fed material.

10. Beet harvester according to one of claims 1 to 9, **characterised in that**, together with the post-topper (11) which is arranged in the vicinity of the defoliator (7) and which forms a second working device (W), the defoliator (7) forms a compact defoliating and topping unit.

11. Beet harvester according to claim 10, **characterised in that** the post-topper (11) is arranged immediately downstream of the operating area (13) of rotating defoliating members (8) of the defoliator (7).

12. Beet harvester according to claim 10 or 11, **characterised in that** fitting over at least the defoliator (7) there is a channelling sub-assembly in the form of a cowling (14), over the inside face (15) of which the plant parts (P) which are taken hold of by the individual defoliating members (8) in the defoliating chamber (16) can be displaced as the fed flow (A, A').

13. Beet harvester according to one of claims 10 to 12, **characterised in that** the cowling (14) which is provided as the channelling sub-assembly for the fed flow (A, A') is provided with at least one rear tail-piece (17).

14. Beet harvester according to one of claims 10 to 13, **characterised in that**, in the region of the divider (10) of fed material, the fed flow (A) produced by the defoliator (7) can be divided into the two sub-flows (A') which can be directed to respective ones of the tail-pieces (17).

15. Beet harvester according to one of claims 10 to 14, **characterised in that** the tail-pieces (17) of the cowling (14) can be set to different directions of discharge.

16. Beet harvester according to one of claims 10 to 15, **characterised in that** the tail-pieces (17) of the cowling (14) can be displaced to respective directing positions (N, N') which are at acute angles to the direction of travel (F).

17. Beet harvester according to one of claims 1 to 16, **characterised in that** the defoliator (7) co-operates with a post-topper (11) which has a pulled blade head (20).

18. Beet harvester according to claim 17, **characterised in that**, by means of a supporting sub-assembly (21') which fits over the front of the cowling (14), the post-topper (11) is held in a longitudinal plane (R) which is substantially preset by the centre of a row of beets.

19. Beet harvester according to claim 17 or 18, **characterised in that** the supporting sub-assembly (21') has a rocking arm (23) which can be pivoted on a front supporting axis (22) and which co-operates in the vicinity of the blade head (20) with a sensing comb (24).

20. Beet harvester according to one of claims 17 to 19, **characterised in that** at least the horizontal plane of cut (S) at the time of the blade head (20) can be preset by means of the sensing comb (24).

21. Beet harvester according to one of claims 17 to 20, **characterised in that** the plane of cut (S) of the blade head (20) can be varied by means of the sensing comb (24).

22. Beet harvester according to one of claims 17 to 21, **characterised in that**, on a positioning arm (25, 44) which is independent of the blade head (20) held on the rocking arm (23), the sensing comb (24) can be locked in position

23. Beet harvester according to one of claims 17 to 22, **characterised in that** a resilient director (26) which displaces the cut-off pieces of beet into the gap (Z) is provided in the vicinity of the blade head (20)..

24. Beet harvester according to one of claims 17 to 23, **characterised in that** the blade head (20) is provided with a blade (27) which is aligned at an acute angle (L) to the plane of cut (S).

25. Beet harvester according to one of claims 17 to 24, **characterised in that** the blade head (20) is provided with a winged blade (28) having a plurality of cutting edges.

26. Beet harvester according to claim 25, **characterised in that** the winged blade (28) has a blade (29) for making a vertical cut which can be aligned substantially in the longitudinal plane (R) of a row of beets, and horizontal blades (30, 30') on respective ones of the two sides of the blade (29) for making a vertical cut.

27. Beet harvester according to claim 25 or 26, **characterised in that** the blade (29) for making a vertical cut is set at an angle (31) which is inclined in the direction of travel (F).

28. Beet harvester according to claim 26, **characterised in that** the set angle (31) is 5° to 85°, and preferably 45°, in each case.

29. Beet harvester according to one of claims 25 to 28, **characterised in that** the horizontal blades (30, 30') are splayed out from the longitudinal plane (R) in the form of wings (angle 30") and can be aligned at an acute angle (L) to the plane of cut (S).

30. Beet harvester according to one of claims 1 to 16, **characterised in that** the defoliating and topping unit is provided with a cleaning arrangement (32, 32') in the region between the defoliator (7) and the post-topper (11).

31. Beet harvester according to claim 30, **characterised in that** the fed flow (A) produced by the defoliator (7) can be directed over the cleaning arrangement (32, 32') and into the tail-pieces (17) of the cowling (14), which reach to a point downstream of the post-topper (11).

32. Beet harvester according to claim 30 or 31, **characterised in that**, on the inside face (15) of the cowling (14), the divider (10) of fed material extends between the defoliator (7) and the cleaning arrangement (32, 32").

33. Beet harvester according to one of claims 30 to 32, **characterised in that**, in the transverse direction of the harvester (1), the cleaning arrangements (32, 32") are each arranged close to the rear end (19) of the cowling (14), substantially between the two tail-pieces (17) of adjacent defoliators (7).

34. Beet harvester according to one of claims 30 to 33, **characterised in that** the cleaning arrangement (32) takes the form of a longitudinal cleaner having an axis of rotation (33) which extends transversely to the direction of travel (F).

35. Beet harvester according to claim 35, **characterised in that** the longitudinal cleaner has cleaning members (34) which can be rotated clockwise or anti-clockwise (arrows 36, 37).

36. Beet harvester according to claim 34 or 35, **characterised in that** the cleaning members (34) of the longitudinal cleaner each co-operate with additional cleaners (35) which are provided on the defoliator (7) positioned in front of them.

37. Beet harvester according to one of claims 34 to 36, **characterised in that** the cleaning members (34) of the longitudinal cleaner rotate in the opposite direction (36) to the defoliator (7)

38. Beet harvester according to one of claims 34 to 37, **characterised in that** the defoliator (7) has one of the additional cleaners (35) in the vicinity of each of its defoliating members (8).

39. Beet harvester according to one of claims 34 to 38, **characterised in that** the cleaning members (34) and/or the additional cleaners (35) are composed of a material of rubber-like elasticity.

40. Beet harvester according to one of claims 30 to 33, **characterised in that** the cleaning arrangement (32') is provided with at least one transverse cleaner which has an axis and shaft for rotation (37) which extends in the direction of travel (F).

41. Beet harvester according to claim 40, **characterised in that** the transverse cleaner is provided with two cleaning sections (38, 39) which are arranged one behind the other on respective portions (37', 37") of the axis and shaft for rotation (37).

42. Beet harvester according to claim 40 or 41, **characterised in that** the two portions (37', 37") which receive the cleaning sections (38, 39) can be controlled in different ways.

43. Beet harvester according to one of claims 40 to 42, **characterised in that** the two cleaning sections (38, 39) can be driven in opposite directions of rotation (38', 39').

44. Beet harvester according to one of claims 40 to 43, **characterised in that** the cleaning members (38, 39) can be displaced in the direction defined by the axis and shaft for rotation (37).

45. Beet harvester according to one of claims 1 to 44, **characterised in that**, in a 6-row version, its defoliating and topping units have sub-assemblies which are arranged substantially in mirror symmetry to a longitudinal centre plane (M) of the harvester (1).

46. Beet harvester according to claim 45, **characterised in that** the sub-assemblies can each be fastened to a common part (3, 42') of the chassis and there is provided on the latter a driving connection which operates at least those defoliators (7) which are situated on a common drive shaft (42).

47. Beet harvester according to claim 45 or 46, **characterised in that** a driving connection which is taken off from the defoliator(s) (7), or at least one separate driving member, is provided to operate the cleaning arrangement(s) (32, 32').

## Revendications

1. Récolteuse de betteraves pour betteraves sucrières ou produits récoltés (E) similaires, avec un hache-feuilles (7) retirant les feuilles de betteraves, la verdure et les parties de plantes (P) similaires du produit récolté (E) cultivé en particulier sur plusieurs rangs et les déposant entre les rangs (R), au moins une décolleteuse postérieure étant prévue dans le sens de déplacement (F) derrière son élément de hachage (8), **caractérisée en ce que** les parties de plantes (P) saisies par le hache-feuilles (7) forment un courant de transport (A) pouvant être déplacé essentiellement jusque derrière la décolleteuse postérieure, de sorte à pouvoir éviter les souillures du moins au niveau des collets de betteraves (E) pouvant être saisis par la décolleteuse postérieure (11) dans une phase de décolletage au moyen du courant de transport (A, A', A") dérivé à la manière d'un enjambement au moins jusque derrière la décolleteuse postérieure (11).

2. Récolteuse de betteraves selon la revendication 1, **caractérisée en ce que** le courant de transport (A) formé par le hache-feuilles (7) peut être déplacé dans le sens opposé au sens de déplacement (F) et peut être dérivé avec déport latéral (D) par rapport au rang de betteraves (R) correspondant derrière la décolleteuse postérieure (11).

3. Récolteuse de betteraves selon la revendication 1 ou 2, **caractérisée en** en ce que le courant de transport (A) généré par le hache-feuilles (7) peut être déplacé essentiellement au-dessus de la décolleteuse postérieure (11).

4. Récolteuse de betteraves selon l'une quelconque des revendications 1 à 3, **caractérisée en ce que** le courant de transport (A) généré à partir d'un rang de betteraves (R) correspondant peut être partagé en plusieurs courants partiels (A') et ceux-ci peuvent être déplacés derrière la décolleteuse postérieure (11) placée en aval du hache-feuilles (7).

5. Récolteuse de betteraves selon l'une quelconque des revendications 1 à 4, **caractérisée en ce que** le courant de transport (A) peut être divisé en deux courants partiels (A') présentant respectivement un déport latéral (C, C') par rapport au plan médian longitudinal (R) du hache-feuilles (7) correspondant et ceux-ci peuvent être introduits derrière la décolleteuse postérieure (11) placée en aval dans des espaces de dépôt respectivement intermédiaires (Z) correspondants à côté du (des) rang(s) de betteraves (E').

6. Récolteuse de betteraves selon l'une quelconque des revendications 1 à 5, **caractérisée en ce que** les parties saisies par la décolleteuse postérieure (11), en particulier les découpes de betteraves produites lors du décolletage, peuvent être regroupées avec le courant de transport (A) respectivement un courant de transport partiel (A') correspondant.

7. Récolteuse de betteraves selon la revendication 6, **caractérisée en ce que** les découpes de betteraves et parties de plantes hachées (P') d'un courant partiel (A') peuvent être déposées ensemble.

8. Récolteuse de betteraves selon la revendication 6 ou 7, **caractérisée en ce que** les découpes de betteraves peuvent être déposées sur les parties de plantes (P') déjà déposées.

9. Récolteuse de betteraves selon l'une quelconque des revendications 1 à 8, **caractérisée en ce que** le courant de transport (A) pouvant être déplacé vers l'arrière au-dessus du hache-feuilles (7) peut être divisé en deux courants partiels (A') au moyen d'un séparateur de produits transportés (10).

10. Récolteuse de betteraves selon l'une quelconque des revendications 1 à 9, **caractérisée en ce que** le hache-feuilles (7) forme avec la décolleteuse postérieure (11) agencée à proximité de celui-ci comme deuxième outil (W) une unité de hachage et décolletage compacte.

11. Récolteuse de betteraves selon la revendication 10, **caractérisée en ce que** la décolleteuse postérieure (11) est agencée immédiatement derrière la zone d'action (13) d'éléments de hachage (8) rotatifs du hache-feuilles (7).

12. Récolteuse de betteraves selon la revendication 10 ou 11, **caractérisée en ce qu'**au moins le hache-feuilles (7) est recouvert par un ensemble de guidage sous la forme d'un capot de recouvrement (14), le long du côté intérieur (15) duquel les parties de plantes (P) saisies par les éléments de hachage (8) correspondants dans l'espace de hachage (16) peuvent être déplacées comme le courant de transport (A, A').

13. Récolteuse de betteraves selon l'une quelconque des revendications 10 à 12, **caractérisée en ce que** le capot de recouvrement (14) prévu comme ensemble de guidage pour le courant de transport (A, A') est doté d'au moins un embout arrière (17).

14. Récolteuse de betteraves selon l'une quelconque des revendications 10 à 13, **caractérisée en ce que** le courant de transport (A) généré par le hache-feuilles (7) peut être divisé au niveau du séparateur de produits transportés (10) en deux courants partiels (A') pouvant être guidés respectivement vers l'un des embouts (17).

15. Récolteuse de betteraves selon l'une quelconque des revendications 10 à 14, **caractérisée en ce que** les embouts (17) du capot de recouvrement (14) peuvent être réglés sur différents sens d'éjection.

16. Récolteuse de betteraves selon l'une quelconque des revendications 10 à 15, **caractérisée en ce que** les embouts (17) du capot de recouvrement (14) peuvent être déplacés dans des positions de guidage (N, N') correspondantes formant un angle aigu par rapport au sens de déplacement (F).

17. Récolteuse de betteraves selon l'une quelconque des revendications 1 à 16, **caractérisée en ce que** le hache-feuilles (7) coopère avec une décolleteuse postérieure (11) présentant une tête de lame (20) tirée.

18. Récolteuse de betteraves selon la revendication 17, **caractérisée en ce que** la décolleteuse postérieure (11) est maintenue dans un plan longitudinal (R) prévu essentiellement depuis le milieu du rang de betteraves au moyen d'un ensemble support (21') enjambant côté avant le capot de recouvrement (14).

19. Récolteuse de betteraves selon la revendication 17 ou 18, **caractérisée en ce que** l'ensemble support (21') présente un bras oscillant (23) pouvant pivoter autour d'un axe de retenue avant (22) et coopérant à proximité de la tête de lame (20) avec un peigne palpeur (24).

20. Récolteuse de betteraves selon l'une quelconque des revendications 17 à 19, **caractérisée en ce qu'**au moins le plan de coupe horizontal (S) correspondant de la tête de lame (20) peut être prédéfini à l'aide du peigne palpeur (24).

21. Récolteuse de betteraves selon l'une quelconque des revendications 17 à 20, **caractérisée en ce que** le plan de coupe (S) de la tête de lame ('20) peut être modifié à l'aide du peigne palpeur (24).

22. Récolteuse de betteraves selon l'une quelconque des revendications 17 à 21, **caractérisée en ce que** le peigne palpeur (24) peut être fixé au niveau d'un levier de réglage (25 ; 44) indépendant de la tête de lame (20) maintenue au niveau du bras oscillant (23).

23. Récolteuse de betteraves selon l'une quelconque des revendications 17 à 22, **caractérisée en ce qu'**un ressort de guidage (26) déplaçant la découpe de betterave dans l'espace intermédiaire (Z) est prévu à proximité de la tête de lame (20).

24. Récolteuse de betteraves selon l'une quelconque des revendications 17 à 23, **caractérisée en ce que** la tête de lame (20) est prévue avec une lame en feuille (27) pouvant être orientée suivant un angle aigu (L) par rapport au plan de coupe (S).

25. Récolteuse de betteraves selon l'une quelconque des revendications 17 à 24, **caractérisée en ce que** la tête de lame (20) est dotée d'une lame en aile (28) à plusieurs tranchants.

26. Récolteuse de betteraves selon la revendication 25, **caractérisée en ce que** la lame en aile (28) présente une lame de coupe verticale (29) pouvant être orientée essentiellement dans le plan longitudinal (R) du rang de betteraves et des deux côtés de celle-ci respectivement une lame horizontale (30, 30').

27. Récolteuse de betteraves selon la revendication 25 ou 26, **caractérisée en ce que** la lame de coupe verticale (29) présente un angle d'attaque (31) incliné dans le sens de déplacement (F).

28. Récolteuse de betteraves selon la revendication 26, **caractérisée en ce que** l'angle d'attaque (31) est respectivement de 5° à 85°, de préférence de 45°.

29. Récolteuse de betteraves selon l'une quelconque des revendications 25 à 28, **caractérisée en ce que** les lames horizontales (30, 30') sont écartées en forme d'aile (angle 30") par rapport au plan longitudinal (R) et peuvent être orientées suivant un angle aigu (L) par rapport au plan de coupe (S).

30. Récolteuse de betteraves selon l'une quelconque des revendications 1 à 16, **caractérisée en ce que** l'unité de hachage et décolletage est dotée dans la zone située entre le hache-feuilles (7) et la décolleteuse postérieure (11), d'un dispositif de nettoyage (32, 32').

31. Récolteuse de betteraves selon la revendication 30, **caractérisée en ce que** le courant de transport (A) généré par le hache-feuilles (7) peut être introduit dans les embouts (17) du capot de recouvrement (14) allant jusque derrière la décolleteuse postérieure (11) en passant au-dessus du dispositif de nettoyage (32, 32').

32. Récolteuse de betteraves selon la revendication 30 ou 31, **caractérisée en ce que** le séparateur de produits transportés (10) s'étend du côté intérieur (15) du capot de recouvrement (14) entre le hache-feuilles (7) et le dispositif de nettoyage (32, 32').

33. Récolteuse de betteraves selon l'une quelconque des revendications 30 à 32, **caractérisée en ce que** dans le sens transversal de la machine (1), les dispositifs de nettoyage (32, 32') sont agencés respectivement essentiellement entre les deux embouts (17) de hache-feuilles (7) adjacents à proximité de l'extrémité arrière (19) du capot de recouvrement (14).

34. Récolteuse de betteraves selon l'une quelconque des revendications 30 à 33, **caractérisée en ce que** le dispositif de nettoyage (32) est réalisé sous la forme d'un nettoyeur longitudinal présentant un axe de rotation (33) s'étendant transversalement au sens déplacement (F).

35. Récolteuse de betteraves selon la revendication 35, **caractérisée en ce que** le nettoyeur longitudinal présente des éléments de nettoyage (34) pouvant tourner dans le sens horaire respectivement anti-horaire (flèche 36, 37).

36. Récolteuse de betteraves selon la revendication 34 ou 35, **caractérisée en ce que** les éléments de nettoyage (34) du nettoyeur longitudinal coopèrent avec des nettoyeurs supplémentaires (35) correspondants prévus sur le hache-feuilles (7) placé en amont.

37. Récolteuse de betteraves selon l'une quelconque des revendications 34 à 36, **caractérisée en ce que** les éléments de nettoyage (34) du nettoyeur longitudinal tournent dans un sens de rotation opposé (36) à celui du hache-feuilles (7).

38. Récolteuse de betteraves selon l'une quelconque des revendications 34 à 37, **caractérisée en ce que** le hache-feuilles (7) présente à proximité de ses éléments de hachage (8) respectivement l'un des nettoyeurs longitudinaux (35).

39. Récolteuse de betteraves selon l'une quelconque des revendications 34 à 38, **caractérisée en ce que** les éléments de nettoyage (34) et/ou les nettoyeurs supplémentaires (35) sont en un matériau élastique.

40. Récolteuse de betteraves selon l'une quelconque des revendications 30 à 33, **caractérisée en ce que** le dispositif de nettoyage (32') est doté d'au moins un nettoyeur transversal présentant un axe de rotation (37) s'étendant dans le sens de déplacement (F).

41. Récolteuse de betteraves selon la revendication 40, **caractérisée en ce que** le nettoyeur transversal est doté de deux segments de nettoyage (38, 39) agencés l'un derrière l'autre sur des sections (37', 37") correspondantes de l'axe de rotation (37).

42. Récolteuse de betteraves selon la revendication 40 ou 41, **caractérisée en ce que** les deux sections (37', 37") recevant les segments de nettoyage (38, 39) peuvent être commandées différemment.

43. Récolteuse de betteraves selon l'une quelconque des revendications 40 à 42, **caractérisée en ce que** les deux segments de nettoyage (38, 39) peuvent être entraînés avec des sens de rotation opposés (38', 39').

44. Récolteuse de betteraves selon l'une quelconque des revendications 40 à 43, **caractérisée en ce que** les éléments de nettoyage (38, 39) peuvent être déplacés en direction de l'axe de rotation (37).

45. Récolteuse de betteraves selon l'une quelconque des revendications 1 à 44, **caractérisée en ce que** ses unités de hachage et décolletage respectivement de nettoyage présentent pour un modèle à 6 rangs des ensembles agencés de manière essentiellement symétrique par rapport à un plan médian longitudinal (M) de la machine (1).

46. Récolteuse de betteraves selon la revendication 45, **caractérisée en ce que** les ensembles peuvent être fixés respectivement au niveau d'un élément cadre commun (3, 42') et au niveau de celui-ci est prévue une liaison d'entraînement actionnant au moins le hache-feuilles (7) situé sur un arbre d'entraînement commun (42).

47. Récolteuse de betteraves selon la revendication 45 ou 46, **caractérisée en ce qu'**une liaison d'entraînement dérivée du (des) hache-feuilles (7) ou au moins un organe d'entraînement séparé est prévu pour l'actionnement du (des) dispositif(s) de nettoyage (32, 32').
